# EUROPEAN PATENT APPLICATION

(11) **EP 4 706 591 A1**
(43) Date of publication of application: **11.03.2026**
(21) Application number: 25195562.1
(22) Date of filing: 13.08.2025
(51) Int. Cl.: A61C 15/04

(54) **DENTAL FLOSSER ASSEMBLY WITH DISPOSABLE PORTION AND MEANS FOR ADJUSTING FLOSS TENSION**

(30) Priority: 29.08.2024 US 202418819292
(71) Applicant: Xu, Meng, West Vancouver BC V7V 1N3 (CA)
(72) Inventor: Xu, Meng, West Vancouver BC V7V 1N3 (CA)
(74) Representative: Weidner Stern Jeschke

(57) **Abstract**

A dental flosser assembly or dental flosser comprises a handle member, wherein the handle member includes a U-shaped seat portion having a U-shaped trough defined therein, wherein the U-shaped seat portion includes a top surface, a bottom surface and opposing first and second side surfaces, and wherein the U-shaped seat portion includes a first arm portion and a second arm portion, a U-shaped portion having a first arm and a second arm spaced apart from each other, wherein the U-shaped trough includes a bottom surface and a top opening, wherein the top opening is open to the first side surface of the U-shaped seat portion, and wherein the U-shaped portion is received in the U-shaped trough through the top opening.

## Description

### FIELD OF THE INVENTION

The present invention relates in general to dental and oral cleaning devices and in particular to hand-held dental flossers (e.g., dental floss picks or dental floss holders) with means for adjusting floss tension.

### BACKGROUND OF THE INVENTION

The spaces between teeth and the surfaces of teeth in general can be cleaned by a variety of methods including brushing, machine-driven jets of water, toothpicks and the like, and by flossing with dental floss or dental tape or similar thread. Dental floss is a cord of thin filaments generally used to remove food and dental plaque from teeth.

One of the chief causes of caries and a principal cause of periodontal disease is bacterial plaque formation that develops on tooth surfaces. When removed, new plaque can reform in less than 24 hours. Therefore, in order to maintain optimal dental hygiene and health, flossing should be carried out at least once per day.

Many people do not floss their teeth on a daily basis, because the manual procedure for using conventional dental floss is difficult and tedious. The use of a hand-held dental flosser (also known as a floss holder or a floss pick) has made flossing more convenient and less difficult. A dental flosser generally comprises two prongs extending from a thin plastic body (or handle). A floss strand runs between the two prongs. As an example, a conventional dental flosser is disclosed in United States Design Patent No. D618396 entitled "Dental floss pick". Conventional dental flossers are usually made of a rigid and inflexible plastic material, and the tension of the floss strand between the two prongs is fixed.

A major shortcoming of conventional dental flossers is that the tension in the floss strand is fixed, so that the relatively high tension required to enable proper insertion of the floss strand between the teeth, which action requires the floss strand to remain tense, does not allow the floss strand to curve around the profile of the tooth away from the interdental space. As a consequence, proper cleaning of plaque and bacteria from surfaces of the teeth other than interdental surfaces is not readily performed.

Therefore, it is desirable to provide an improved hand-held dental flosser with means for adjusting floss tension and which is more effective for cleaning the tooth surfaces around the profile of the tooth (including the front surface, the back surface, and the interdental surface of the tooth).

### BRIEF DESCRIPTION OF THE DRAWINGS

FIG. 1 is a perspective view of a dental flosser with a removable U-shaped portion in accordance with a preferred embodiment of the present invention.
FIG. 2 is an exploded perspective view of the dental flosser of FIG. 1.
FIG. 3 is a side elevational view of the dental flosser of FIG. 1.
FIG. 4 is a perspective view of a portion of the dental flosser of FIG. 1.
FIG. 5 is a perspective view of the U-shaped portion attached to the floss attachment member.

### DETAILED DESCRIPTION OF THE PREFERRED EMBODIMENTS

The following description and drawings are illustrative and are not to be construed as limiting. Numerous specific details are described to provide a thorough understanding of the disclosure.

One aspect of the invention relates to a hand-held dental flosser. The dental flosser comprises a U-shaped portion which has two spaced-apart arms (a first arm and a second arm), and a handle portion connected to the U-shaped portion. The dental flosser also comprises a floss strand. The floss strand comprises a first terminal end and a second terminal end. The first terminal end of the floss strand is fixedly attached to the first arm of the U-shaped portion such that the position of the first terminal end of the floss strand does not move relative to the first arm of the U-shaped portion. The location of this attachment may be at or near the end of the first arm of the U-shaped portion. The second terminal end of the floss strand is attached to a floss strand attachment piece. A user can manipulate the floss strand attachment piece either manually (or mechanically or electronically) to move the second terminal end of the floss strand to increase or decrease or maintain tension of the floss strand. A middle portion of the floss strand is slideably mounted on the second arm of the U-shaped portion such that a middle portion of the floss strand can slide relative to the second arm of the U-shaped portion. A number of possible mounting mechanisms may be employed to enable a middle portion of the floss strand to be slideably mounted on the second arm of the U-shaped portion, such as a fixed pulley, a pivot, a wheel, a rotor, a channel, a passageway, a hole, or some other suitable means. The location of the mounting mechanism may be at or near the end of the second arm of the U-shaped portion. The mounting mechanism prevents the floss strand from getting completely detached from the second arm of the U-shaped portion, but allows the floss strand to slide.

One aspect of the invention relates to a hand-held dental flosser. The dental flosser comprises a U-shaped portion which has two spaced-apart arms, a handle portion connected to the U-shaped portion, and a slide member portion separate from or detachably connected to the handle portion (or the U-shaped portion). In some embodiments, the U-shaped portion, the handle portion and the slide member portion are all made of a same suitable material (such as plastic) and are manufactured using an injection molding process. In some embodiments, the dental flosser is manufactured as a one-piece product, having the U-shaped portion, the handle portion and the slide member portion connected together. The slide member portion may be connected to either the handle portion or the U-shaped portion at a narrow connecting point, and a user can apply force at the narrow connecting point to break the slide member portion apart from the handle portion or the U-shaped portion so that the slide member becomes a separate component.

The dental flosser also comprises a floss strand. In some embodiments, the floss strand is injection molded with the dental flosser in situ. The floss strand has two ends. The first end of the floss strand is fastened to and embedded in the first arm of the U-shaped portion (i.e., the arm distal to the handle portion). The second end of the floss strand is fastened to and embedded in the slide member. There are a number of methods to securely fasten the ends of the floss strand. One example method is to let the end of the floss strand to extend out from the plastic during the injection molding process and to heat or burn the floss strand ends to coalesce into beads of diameter greater than the floss, which prevents the floss strand from being pulled out from the plastic.

A middle section of the floss strand passes through a channel inside the second arm of the U-shaped portion. This channel is created when the floss strand is injection molded with the dental flosser in situ. The middle section of the floss strand can slide inside the channel inside the second arm of the U-shaped portion.

The floss strand has three contact points (or contact regions) with the dental flosser. The floss strand has a first end which is fastened to the first arm of the U-shaped portion. This is the first contact point. The floss strand has a second end which is fastened to the slide member. This is the second contact point. Between its first end and its second end, the floss strand also contacts the second arm of the U-shaped portion by passing through the channel or some other mounting mechanism in the second arm of the U-shaped portion. This is the third contact point. In this sense, the function of the second arm of the U-shaped portion with respect to the floss strand is similar to a fixed pulley which enables the floss strand to be mounted on it and slide around it. The length of the floss strand between its two ends is fixed. However, the portion of the floss strand between the first and second arms of the U-shaped portion is adjustable by the user.

In some embodiments, the dental flosser comprises a longitudinal guide groove or channel in the handle portion. The groove or channel is dimensioned such that the slide member can fit into the groove or channel and can slide along the groove or channel. The user can fit the slide member into the groove or channel and then use his or her thumb or finger to slide the slide member along the groove or channel. When the slide member is moved in one direction, it increases the tension of the floss strand. When the slide member is moved in the other direction, it decreases the tension of the floss strand. Therefore, the user can adjust the tension of the floss strand at will by sliding the slide member along the guide groove.

One aspect of the invention relates to a dental flosser or a dental flosser assembly. The dental flosser assembly or dental flosser comprises a handle member that includes a proximal end and a distal end, a U-shaped portion removably secured to the distal end of the handle member, the U-shaped portion having a first arm and a second arm spaced apart from each other, a floss strand attachment member associated with and movable with respect to the handle member between at least a first position and a second position, and a floss strand having a length and a first end and a second end, wherein the first end of the floss strand is fastened to the first arm and the second end of the floss strand is attached to the floss strand attachment member. In some embodiments, the second arm includes a channel defined therethrough, wherein a middle portion of the floss strand extends through the channel such that a portion of the floss strand extends between the first and second arms. In some embodiments, the floss strand attachment member includes a contact member that is pivotable between an engaged position and a disengaged position, wherein the contact member includes a contact surface that contacts the handle portion in the engaged position and is pivoted out of contact with the handle portion in the disengaged position. In some embodiments, the U-shaped portion includes a connection portion extending therefrom, wherein the connection portion is received in a pocket defined in the distal end of the handle member to removably secure the U-shaped portion to the handle member. In some embodiments, the connection portion includes a button portion that is movable between a locking position where the U-shaped portion is secured to the handle member and an unlocking position where the U-shaped portion is removable from the handle member. In some embodiments, the handle member includes a U-shaped seat portion, and wherein the U-shaped portion is received in the U-shaped seat portion. In some embodiments, the second arm of the U-shaped portion includes a channel protrusion member extending therefrom, wherein the U-shaped seat portion includes a U-shaped trough defined therein, wherein the U-shaped trough includes a bottom surface, wherein the channel protrusion member and the bottom surface of the U-shaped trough define a channel through which the floss strand extends. In some embodiments, the first arm includes a first receiver member and the second arm includes a second receiver member, wherein a first protrusion member is received in the first receiver member and the channel protrusion member is received in the second receiver member. In some embodiments, one of the U-shaped seat portion and the U-shaped portion include an alignment protrusion and the other of the U-shaped seat portion and the U-shaped portion includes an alignment recess, wherein the alignment protrusion is received in the alignment recess. In some embodiments, the U-shaped seat portion includes a U-shaped trough defined therein, wherein the U-shaped seat portion includes a cut out portion that communicates with the U-shaped trough, wherein the U-shaped portion includes a tab member that is received in the cut out portion. In some embodiments, a space is defined between the U-shaped seat portion and the tab member. In some embodiments, the handle portion includes a slot defined therethrough, wherein the floss strand attachment member includes the contact member and a male member extending from the contact member, wherein at least a portion of the male member extends into the slot, wherein the male member includes a living hinge, wherein the contact member is pivotable about the living hinge between the engaged position and the disengaged position. In some embodiments, the male member defines a first axis, wherein the male member includes a first end that is attached to the contact member and a second end opposite the contact member, and wherein the second end of the male member can extend into the slot while the contact member is located outside the slot. In some embodiments, the handle portion and the U-shaped portion are co-planar and define a first plane that bifurcates the handle portion and the U-shaped portion. In some embodiments, the handle portion includes a slot defined therethrough, wherein the floss strand attachment member includes a male member, wherein at least a portion of the male member extends into the slot. In some embodiments, at least a portion of the floss strand attachment member is rotatable with respect to the handle portion to tension the floss strand. In some embodiments, at least a portion of the floss strand attachment member is movable toward or away from the distal end to tension the floss strand. In some embodiments, at least a portion of the floss strand attachment member is movable toward or away from the distal end to tension the floss strand.

One aspect of the invention relates to a dental flosser or a dental flosser assembly. The dental flosser assembly or dental flosser comprises a handle member, wherein the handle member includes a U-shaped seat portion having a U-shaped trough defined therein, wherein the U-shaped seat portion includes a top surface, a bottom surface and opposing first and second side surfaces, and wherein the U-shaped seat portion includes a first arm portion and a second arm portion, a U-shaped portion having a first arm and a second arm spaced apart from each other, wherein the U-shaped trough includes a bottom surface and a top opening, wherein the top opening is open to the first side surface of the U-shaped seat portion, and wherein the U-shaped portion is received in the U-shaped trough through the top opening, wherein the first arm includes a first protrusion member extending therefrom and the second arm includes a channel protrusion member extending therefrom, wherein the first protrusion member includes a distal end and the channel protrusion member includes a distal end, wherein the distal end of the first protrusion member extends into and is received in a first receiver defined in the U-shaped seat portion and the distal end of the channel protrusion member extends into and is received in a second receiver member defined in the U-shaped seat portion, wherein a first plane extends through and bifurcates the first arm and second arm of the U-shaped portion, wherein a second plane extends through and bifurcates the first arm portion and second arm portion of the U-shaped seat portion, and wherein when the U-shaped portion is received in and seated in the U-shaped trough, the first plane and the second plane are generally parallel, and a floss strand attachment member associated with and movable with respect to the handle member between at least a first position and a second position, and a floss strand having a length and a first end and a second end, wherein the first end of the floss strand is fastened to the first arm and the second end of the floss strand is attached to the floss strand attachment member, wherein the floss strand attachment member is movable between the first position and the second position to increase or decrease the tension of the floss strand. In some embodiments, the second arm includes a channel defined therethrough, wherein a middle portion of the floss strand extends through the channel such that a portion of the floss strand extends between the first and second arms. In some embodiments, the floss strand attachment member includes a contact member that is pivotable between an engaged position and a disengaged position, wherein the contact member includes a contact surface that contacts the handle member in the engaged position and is pivoted out of contact with the handle member in the disengaged position. In some embodiments, one of the U-shaped seat portion and the U-shaped portion include an alignment protrusion and the other of the U-shaped seat portion and the U-shaped portion includes an alignment recess, wherein the alignment protrusion is received in the alignment recess. In some embodiments, the U-shaped seat portion includes a cut out portion that communicates with the U-shaped trough, wherein the U-shaped portion includes a tab member that is received in the cut out portion. In some embodiments, a space is defined between the U-shaped seat portion and the tab member. In some embodiments, the handle member includes a slot defined therethrough, with a male member extending from the contact member, wherein at least a portion of the male member extends into the slot, wherein the male member includes a living hinge, wherein the contact member is pivotable about the living hinge between the engaged position and the disengaged position. In some embodiments, the male member defines a first axis, wherein the male member includes a first end that is attached to the contact member and a second end opposite the contact member, and wherein the second end of the male member can extend into the slot while the contact member is located outside the slot. In some embodiments, the handle member includes a slot defined therethrough, wherein the floss strand attachment member includes a male member, wherein at least a portion of the male member extends into the slot. In some embodiments, the floss strand attachment member is secured to the U-shaped portion prior to being associated with the handle. In some embodiments, the handle member includes a top surface, a bottom surface and opposing first and second side surfaces, wherein the top surface, bottom surface and opposing first and second side surfaces of the U-shaped seat portion correspond to the top surface, bottom surface and opposing first and second side surfaces of the handle member, wherein the floss strand attachment member is disposed on the first side surface of the handle member. In some embodiments, the first arm portion includes a first groove defined therein that communicates with the U-shaped trough, wherein the second arm portion includes a second groove defined therein that communicates with the U-shaped trough, wherein a portion of the floss strand extends from the first arm, through the first groove, through the second groove and to the second arm. In some embodiments, the first receiver member at least partially defines the first groove, and wherein the second receiver member at least partially defines the second groove. In some embodiments, the first receiver member includes first, second, third and fourth walls that cooperate to define a first aperture. In some embodiments, at least a portion of the distal end of the first protrusion member is received in the first aperture.

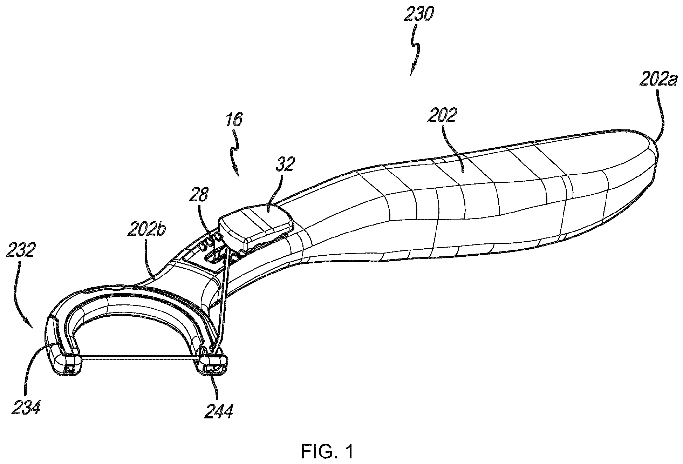

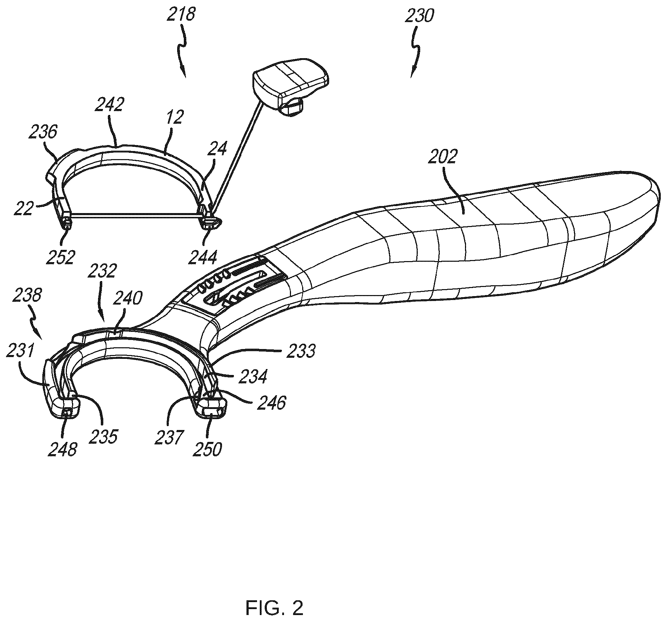

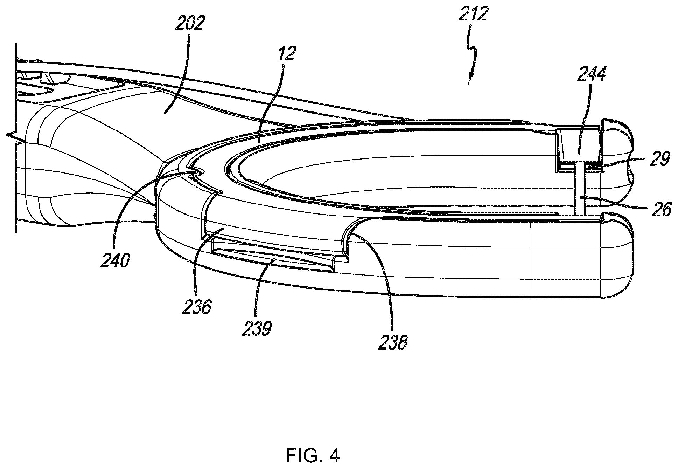

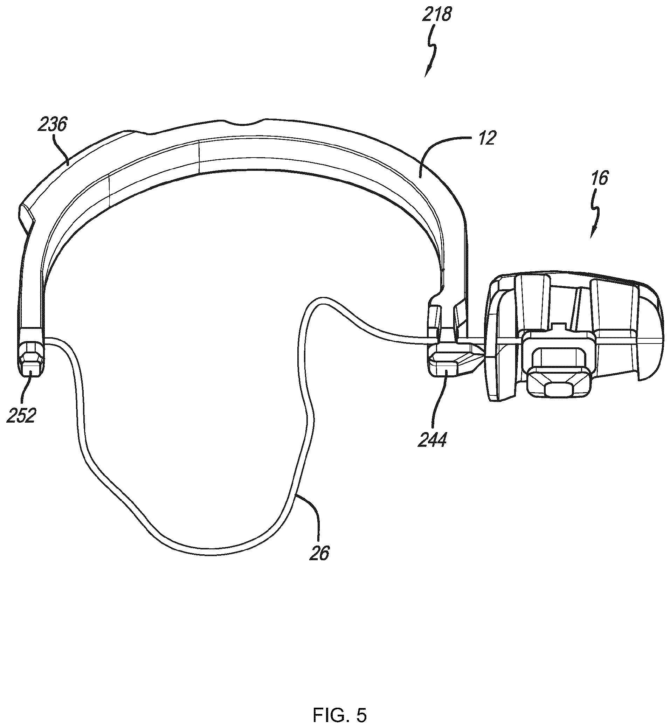

FIGS. 1-5 show a dental flosser assembly 230 that includes a handle member 202 and a U-shaped portion 12 removably secured to the distal end 202b of the handle member. In a preferred embodiment, the dental flosser assembly 230 or the handle member 202 includes a groove or slot 28. A floss strand attachment member 16 preferably includes a contact member 32. The handle member 202 of dental flosser assembly 230 includes a U-shaped seat portion 232 in which the U-shaped portion 12 is received and seated. The U-shaped seat portion 232 includes a U-shaped trough 234 defined therein that is configured to receive the U-shaped portion 12 therein. As shown in FIGS. 2-4, the U-shaped portion 12 includes a tab member 236 that extends outwardly therefrom. When the U-shaped portion 12 is received in the U-shaped trough 234, the tab member 236 is received in a cutout portion 238 of the U-shaped seat portion 232. The tab member 236 can be used to pull or remove the U-shaped portion 12 out of or from the U-shaped trough 234 and the U-shaped seat portion 232. As shown in FIG. 4, in a preferred embodiment the tab member 236 is spaced from the U-shaped seat portion 232 to allow a user to insert their fingernail or another object into the space 239 to engage the tab member 236 and remove the U-shaped portion.

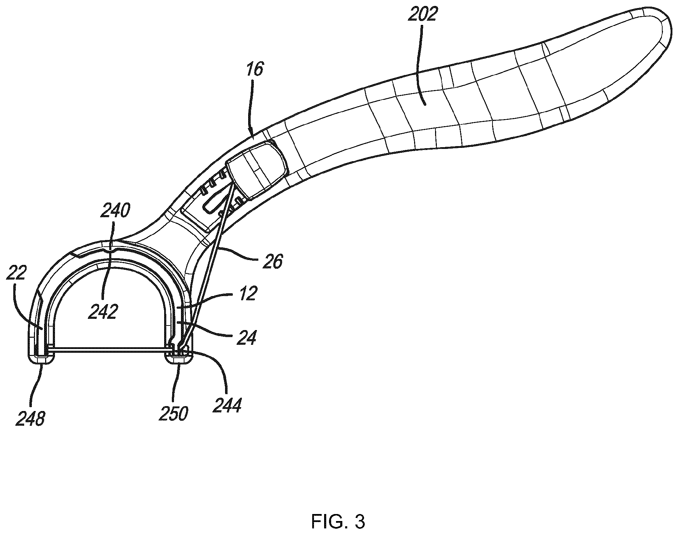

As shown in FIG. 3, the U-shaped seat portion 232 may include an alignment protrusion 240 that is received in an alignment recess 242 defined in the U-shaped portion 12. The alignment protrusion 240 and alignment recess 242 help position and align the U-shaped portion 12 when being seated in the U-shaped trough 234. The alignment protrusion 240 and alignment recess 242 may be reversed such that the alignment protrusion 240 is on the U-shaped portion and the alignment recess 242 is on the U-shaped seat portion 232.

In a preferred embodiment, the second arm of the U-shaped portion 12 includes a channel protrusion member 244 extending therefrom. The U-shaped trough 234 includes a bottom surface 246. The channel protrusion member 244 and the bottom surface 246 of the U-shaped trough 234 define a channel 29 through which the floss strand 26 extends. As shown in FIG. 2, the first arm 22 may include a first receiver member 248 and the second arm 24 may include a second receiver member 250, wherein a first protrusion member 252 is received in the first receiver 248 member and the channel protrusion member 244 is received in the second receiver member 250. When inserting the U-shaped portion 12 through the top opening and into the U-shaped trough 234, the U-shaped portion 12 may need to be angled with the first protrusion member 252 and the channel protrusion member 244 directed downwardly into the U-shaped trough 234 first and then the first protrusion member 252 and the channel protrusion member 244 may be slid or moved into the first receiver member 248 and second receiver member 250. This may be necessary because the first protrusion member 252 and the channel protrusion member 244 may contact the wall or material above the first receiver member 248 and second receiver member 250 if the U-shaped portion 12 is not angled downwardly.

In a preferred embodiment, the second arm of the U-shaped portion 12 includes a channel protrusion member 244 extending therefrom. The U-shaped trough 234 includes a bottom surface 246. The channel protrusion member 244 and the bottom surface 246 of the U-shaped trough 234 define a channel 29 through which the floss strand 26 extends. As shown in FIG. 2, the portion of the U-shaped seat portion 232 associated with the first arm 22 (referred to herein as the first arm portion 231) may include a first receiver member 248 and the portion of the U-shaped seat portion 232 associated with the second arm 24 (referred to herein as the second arm portion 233) may include a second receiver member 250, wherein a first protrusion member 252 is received in the first receiver 248 member and the channel protrusion member 244 is received in the second receiver member 250. The first arm portion 231 may include a first groove 235 defined therein that communicates with the U-shaped trough 234, the second arm portion 233 may include a second groove 237 defined therein that communicates with the U-shaped trough 234, and a portion of the floss strand may extend from the first arm 22, through the first groove 235, through the second groove 237 and to the second arm 24. Furthermore, the U-shaped seat portion 232 includes first and second grooves defined therein that allow the floss to extend from the U-shaped trough 234 between the first and second arm portions 231 and 233.

It will be appreciated that the present invention may allow handle members 202 and removable assemblies 218 (one or more of a floss strand attachment member, U-shaped portion and a floss strand) to be sold separately. In particular, a user may purchase or obtain separate removable assemblies that can be used with the same handle member. FIG. 18 shows an exemplary removable assembly 218 that includes a U-shaped portion 12, floss strand 26 and a floss strand attachment member 16. The U-shaped portion 12 and floss strand attachment member 16 may be attached to one another and be created in the same mold. The floss strand attachment member 16 may be configured to be removed or detached from the U-shaped portion 12 by the consumer or user. However, this is not a limitation on the invention and the U-shaped portion 12 and floss strand attachment member 16 may be created separately or detached prior to being obtained by the end user.

Any patents and applications and other references noted above, including any that may be listed in accompanying filing papers, are incorporated herein by reference in their entirety. Aspects of the disclosure can be modified, if necessary, to employ the systems, functions, and concepts of the various references described above to provide yet further embodiments of the disclosure.

Accordingly, although exemplary embodiments of the invention have been shown and described, it is to be understood that all the terms used herein are descriptive rather than limiting, and that many changes, modifications, and substitutions may be made by one having ordinary skill in the art without departing from the spirit and scope of the invention.

## Claims

1. A dental flosser comprising:
a handle member, wherein the handle member includes a U-shaped seat portion having a U-shaped trough defined therein, wherein the U-shaped seat portion includes a top surface, a bottom surface and opposing first and second side surfaces, and wherein the U-shaped seat portion includes a first arm portion and a second arm portion,
a U-shaped portion having a first arm and a second arm spaced apart from each other, wherein the U-shaped trough includes a bottom surface and a top opening, wherein the top opening is open to the first side surface of the U-shaped seat portion, and wherein the U-shaped portion is received in the U-shaped trough through the top opening, wherein the first arm includes a first protrusion member extending therefrom and the second arm includes a channel protrusion member extending therefrom, wherein the first protrusion member includes a distal end and the channel protrusion member includes a distal end, wherein the distal end of the first protrusion member extends into and is received in a first receiver defined in the U-shaped seat portion and the distal end of the channel protrusion member extends into and is received in a second receiver member defined in the U-shaped seat portion, wherein a first plane extends through and bifurcates the first arm and second arm of the U-shaped portion, wherein a second plane extends through and bifurcates the first arm portion and second arm portion of the U-shaped seat portion, and wherein when the U-shaped portion is received in and seated in the U-shaped trough, the first plane and the second plane are generally parallel,
a floss strand attachment member associated with and movable with respect to the handle member between at least a first position and a second position, and
a floss strand having a length and a first end and a second end, wherein the first end of the floss strand is fastened to the first arm and the second end of the floss strand is attached to the floss strand attachment member, wherein the floss strand attachment member is movable between the first position and the second position to increase or decrease the tension of the floss strand.

2. The dental flosser of claim 1 wherein the second arm includes a channel defined therethrough, wherein a middle portion of the floss strand extends through the channel such that a portion of the floss strand extends between the first and second arms.

3. The dental flosser of claim 1 wherein the floss strand attachment member includes a contact member that is pivotable between an engaged position and a disengaged position, wherein the contact member includes a contact surface that contacts the handle member in the engaged position and is pivoted out of contact with the handle member in the disengaged position.

4. The dental flosser of claim 1 wherein one of the U-shaped seat portion and the U-shaped portion include an alignment protrusion and the other of the U-shaped seat portion and the U-shaped portion includes an alignment recess, wherein the alignment protrusion is received in the alignment recess.

5. The dental flosser of claim 1 wherein the U-shaped seat portion includes a cut out portion that communicates with the U-shaped trough, wherein the U-shaped portion includes a tab member that is received in the cut out portion.

6. The dental flosser of claim 5 wherein a space is defined between the U-shaped seat portion and the tab member.

7. The dental flosser of claim 3 wherein the handle member includes a slot defined therethrough, with a male member extending from the contact member, wherein at least a portion of the male member extends into the slot, wherein the male member includes a living hinge, wherein the contact member is pivotable about the living hinge between the engaged position and the disengaged position.

8. The dental flosser of claim 7 wherein the male member defines a first axis, wherein the male member includes a first end that is attached to the contact member and a second end opposite the contact member, and wherein the second end of the male member can extend into the slot while the contact member is located outside the slot.

9. The dental flosser of claim 1 wherein the handle member includes a slot defined therethrough, wherein the floss strand attachment member includes a male member, wherein at least a portion of the male member extends into the slot.

10. The dental flosser of claim 1 wherein the floss strand attachment member is secured to the U-shaped portion prior to being associated with the handle.

11. The dental flosser of claim 1 wherein the handle member includes a top surface, a bottom surface and opposing first and second side surfaces, wherein the top surface, bottom surface and opposing first and second side surfaces of the U-shaped seat portion correspond to the top surface, bottom surface and opposing first and second side surfaces of the handle member, wherein the floss strand attachment member is disposed on the first side surface of the handle member.

12. The dental flosser of claim 1 wherein the first arm portion includes a first groove defined therein that communicates with the U-shaped trough, wherein the second arm portion includes a second groove defined therein that communicates with the U-shaped trough, wherein a portion of the floss strand extends from the first arm, through the first groove, through the second groove and to the second arm.

13. The dental flosser of claim 12 wherein the first receiver member at least partially defines the first groove, and wherein the second receiver member at least partially defines the second groove.

14. The dental flosser of claim 1 wherein the first receiver member includes first, second, third and fourth walls that cooperate to define a first aperture.

15. The dental flosser of claim 14 wherein at least a portion of the distal end of the first protrusion member is received in the first aperture.
